(19) Europäisches Patentamt
European Patent Office
Office européen des brevets

(11) **EP 3 611 674 A1**

(12) **EUROPEAN PATENT APPLICATION**
published in accordance with Art. 153(4) EPC

(43) Date of publication:
**19.02.2020 Bulletin 2020/08**

(51) Int Cl.:
**G06Q 10/06** (2012.01)  **G05B 19/418** (2006.01)

(21) Application number: **17905722.9**

(22) Date of filing: **13.04.2017**

(86) International application number:
**PCT/JP2017/015086**

(87) International publication number:
**WO 2018/189851 (18.10.2018 Gazette 2018/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NEC Corporation**
**Tokyo 108-8001 (JP)**

(72) Inventors:
• **TADANO Kumiko**
**Tokyo 108-8001 (JP)**
• **MAENO Yoshiharu**
**Tokyo 108-8001 (JP)**

(74) Representative: **Betten & Resch**
**Patent- und Rechtsanwälte PartGmbB**
**Maximiliansplatz 14**
**80333 München (DE)**

(54) **TRANSFER OPERATION CONTROL DEVICE, SYSTEM, AND METHOD, AND RECORDING MEDIUM**

(57) In order to enable to more appropriately determine operation contents when fluctuation in processing speed is great, a transfer operation control method includes: calculating an importance level of each predetermined transfer operation, based on at least one or more of a usage rate of an output buffer of a work station being a transfer source of the transfer operation, and the usage rate of an input buffer of the work station being a transfer destination of the transfer operation, determining, as a candidate for the transfer operation to be performed next, the transfer operation having the maximum importance level, and outputting transfer operation information including information of the work station being the transfer source and the work station being the transfer destination for the determined transfer operation.

Fig.1

**Description**

[Technical Field]

The present invention relates to a transfer operation control device, a system, and a method, and a recording medium which control a transfer operation between work stations.

[Background Art]

As a method of more efficiently performing a production operation in a factory or the like, for example, PTL 1 describes a method of supporting formation of a work plan or a distribution plan of an operator. In this method, an appropriate plan for work and distribution of an operator is formed, based on a performance value of a product-in-process stock volume for a product remaining in a process, production indices of throughput and a lead time, a load (an introduction plan, a route and an order of processes, and the like), and capability (a work shift of an operator, or the like).

On the other hand, a production operation can be considered as a collection of bases (hereinafter, work stations) for performing processing such as production and inspection. An actual form of a work station is a shop or the like grouping a work cell, a machine having a certain function, or the like.

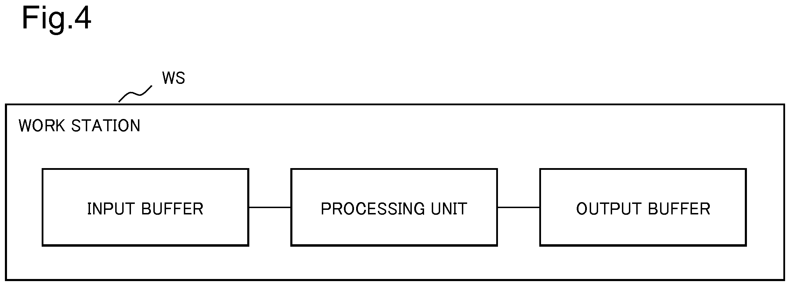

A configuration example of a work station is shown in Fig. 4. A work station includes an input buffer, a processing unit, and an output buffer. The processing unit is a part which performs processing such as production and inspection. The input buffer and the output buffer are parts which each store a stock of products in process, components, products, or the like (hereinafter referred to as products in process for simplicity).

In a work station, processing such as production and inspection is performed for a product in process in the input buffer, and the product in process is stored in the output buffer. Then, a transfer operator, a transfer vehicle, or the like takes out the product in process from the output buffer of the work station, transfers the product in process to an input buffer of another work station, and stores the product in process in the input buffer of the another work station.

[Citation List]

[Patent Literature]

[PTL 1] Japanese Unexamined Patent Application Publication No. 2012-220960

[Summary of Invention]

[Technical Problem]

In the method described in PTL 1, distribution and work plans of an operator suited to a static load which is determined from an introduction plan, a route and an order of processes, and the like are formed.

However, in a multiproduct-variable-quantity-production-type factory and a super-multiproduct-compatible warehouse, a new product is produced and kept with high frequency, a workload itself frequently and greatly changes due to demand variation, and therefore, a processing speed (capability) based on a past performance value is unreliable.

Furthermore, there can be a process which tends to greatly fluctuate in processing speed in essence due to such causes as in examples cited below.

- An unexpected stop tends to occur (e.g., a case where a safety margin for quality assurance is large, and therefore, a manufacturing device in a process is set to be frequently stopped compulsively, a case where a manufacturing device having a low availability is utilized for a process, and the like).
- Work is dependent on capability of an operator, and capability of an operator is not constant (e.g., capability changes depending on a level of proficiency of an operator, or a combination of operators in an operation team).
- A fatigue level of an operator (e.g., a degree of concentration on work changes due to eyestrain or an elapsed time from start of the work)

Thus, the method described in PTL 1 is not able to appropriately determine operation contents when fluctuation in processing speed is great, and there is a possibility that production efficiency decreases.

In other words, when the above-described transfer operation between work stations is controlled, a method which plans an operation, based on a static load, is not able to appropriately control the transfer operation between the work stations when fluctuation in processing speed at each work station is great.

An object of the present invention is to provide a transfer operation control device, a system, and a method, and a recording medium which enable to more appropriately determine operation contents when fluctuation in processing speed is great.

[Solution to Problem]

For settling the above-mentioned problem, a transfer operation control device of the present invention comprises: an operation importance level calculation means for calculating an importance level of each predetermined transfer operation, based on at least one or more of a usage rate of an output buffer of a work station being a transfer source of the transfer operation, and the usage rate of an input buffer of the work station being a transfer destination of the transfer operation, a transfer operation determination means for determining, as a candidate for the transfer operation to be performed next, the transfer operation having the maximum importance level, and an output means for outputting transfer operation information including information of the work station being the transfer source and the work station being the transfer destination for the determined transfer operation.

And, a transfer operation control method of the present invention comprises: calculating an importance level of each predetermined transfer operation, based on at least one or more of a usage rate of an output buffer of a work station being a transfer source of the transfer operation, and the usage rate of an input buffer of the work station being a transfer destination of the transfer operation, determining, as a candidate for the transfer operation to be performed next, the transfer operation having the maximum importance level, and outputting transfer operation information including information of the work station being the transfer source and the work station being the transfer destination for the determined transfer operation.

And, a computer readable recording medium of the present invention is recorded with a transfer operation control program causing a computer to execute: an operation importance level calculation function of calculating an importance level of each predetermined transfer operation, based on at least one or more of a usage rate of an output buffer of a work station being a transfer source of the transfer operation, and the usage rate of an input buffer of the work station being a transfer destination of the transfer operation, a transfer operation determination function of determining, as a candidate for the transfer operation to be performed next, the transfer operation having the maximum importance level, and an output function of outputting transfer operation information including information of the work station being the transfer source and the work station being the transfer destination for the determined transfer operation.

[Advantageous Effects of Invention]

A transfer operation control device, a system, and a method, and a recording medium of the present invention enable to more appropriately determine operation contents when fluctuation in processing speed is great.

[Brief Description of Drawings]

Fig. 1 shows a configuration example of a transfer operation control device in a first example embodiment of the present invention.
Fig. 2 shows an operation example of the transfer operation control device in the first example embodiment of the present invention.
Fig. 3 shows a configuration example of a transfer operation control system in a second example embodiment of the present invention.
Fig. 4 shows a configuration example of a work station in the second example embodiment of the present invention.
Fig. 5 shows a configuration example of a work station network in the second example embodiment of the present invention.
Fig. 6 shows a configuration example of a transfer operation control device 20 in the second example embodiment of the present invention.
Fig. 7 shows an example of a transfer destination management table in the second example embodiment of the present invention.
Fig. 8 shows an example of a movement cost management table in the second example embodiment of the present invention.
Fig. 9 shows an operation example of the transfer operation control device in the second example embodiment of the present invention.
Fig. 10 shows an example of a buffer usage rate in the second example embodiment of the present invention.
Fig. 11 shows an example of an importance level calculation result of the transfer operation control device in the second example embodiment of the present invention.

Fig. 12 shows a hardware configuration example in each example embodiment of the present invention.

[Example Embodiment]

[First Example Embodiment]

A first example embodiment of the present invention is described.

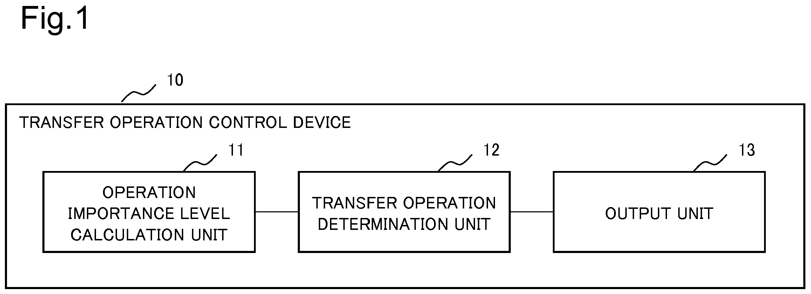

A configuration example of a transfer operation control device 10 in the present example embodiment is shown in Fig. 1.

The transfer operation control device 10 in the present example embodiment includes an operation importance level calculation unit 11, a transfer operation determination unit 12, and an output unit 13.

The operation importance level calculation unit 11 is a part which calculates an importance level of each predetermined transfer operation, based on at least one or more of a usage rate of an output buffer of a work station being a transfer source of the transfer operation, and a usage rate of an input buffer of a work station being a transfer destination of the transfer operation.

The transfer operation determination unit 12 is a part which determines, as a candidate for a transfer operation to be performed next, a transfer operation having a maximum importance level.

The output unit 13 is a part which outputs transfer operation information including information about the work station being the transfer source and the work station being the transfer destination for the determined transfer operation.

By configuring the transfer operation control device 10 in this way, the transfer operation control device 10 calculates an importance level of each predetermined transfer operation. In this case, the transfer operation control device 10 calculates an importance level, based on at least one or more of a usage rate of an output buffer of a work station being a transfer source of the transfer operation, and a usage rate of an input buffer of a work station being a transfer destination of the transfer operation. Then, the transfer operation control device 10 determines, as a candidate for a transfer operation to be performed next, a transfer operation having a maximum importance level. Thereby, even when a usage rate of a buffer varies due to great fluctuation in processing speed at each work station, a next transfer operation can be dynamically determined depending on the usage rate of the buffer. Thus, determination of operation contents when fluctuation in processing speed is great can be more appropriately performed.

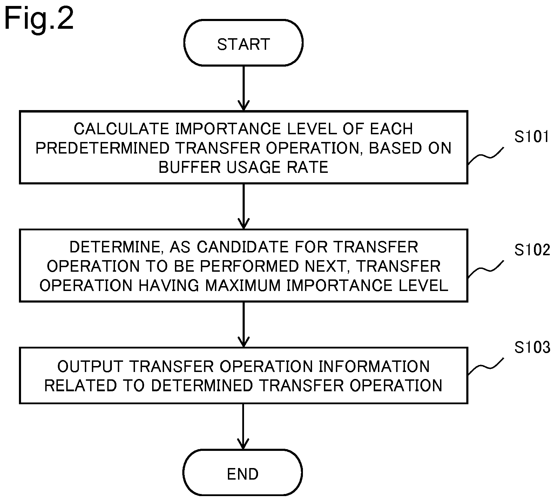

Next, an example of an operation of the transfer operation control device 10 in the present example embodiment is shown in Fig. 2.

The operation importance level calculation unit 11 calculates an importance level of each predetermined transfer operation, based on at least one or more of a usage rate of an output buffer of a work station being a transfer source of the transfer operation, and a usage rate of an input buffer of a work station being a transfer destination of the transfer operation (step S101).

Next, the transfer operation determination unit 12 determines, as a candidate for a transfer operation to be performed next, a transfer operation having a maximum importance level (step S102).

Then, the output unit 13 outputs transfer operation information including information about the work station being the transfer source and the work station being the transfer destination for the determined transfer operation (step S103).

By operating in this way, the transfer operation control device 10 calculates an importance level of each predetermined transfer operation. In this case, the transfer operation control device 10 calculates an importance level, based on at least one or more of a usage rate of an output buffer of the work station being the transfer source of the transfer operation, and a usage rate of an input buffer of the work station being the transfer destination of the transfer operation. Then, the transfer operation control device 10 determines, as a candidate for a transfer operation to be performed next, a transfer operation having a maximum importance level. Thus, determination of operation contents when fluctuation in processing speed is great can be more appropriately performed.

As described above, in the first example embodiment of the present invention, the transfer operation control device 10 calculates an importance level of each predetermined transfer operation. In this case, the transfer operation control device 10 calculates an importance level, based on at least one or more of a usage rate of an output buffer of a work station being a transfer source of the transfer operation, and a usage rate of an input buffer of a work station being a transfer destination of the transfer operation. Then, the transfer operation control device 10 determines, as a candidate for a transfer operation to be performed next, a transfer operation having a maximum importance level. Thereby, even when a usage rate of a buffer varies due to great fluctuation in processing speed at each work station, a next transfer operation can be dynamically determined depending on the usage rate of the buffer. Thus, determination of operation contents when fluctuation in processing speed is great can be more appropriately performed.

[Second Example Embodiment]

Next, a second example embodiment of the present invention is described. In the present example embodiment, a transfer operation control device 20 is more specifically described.

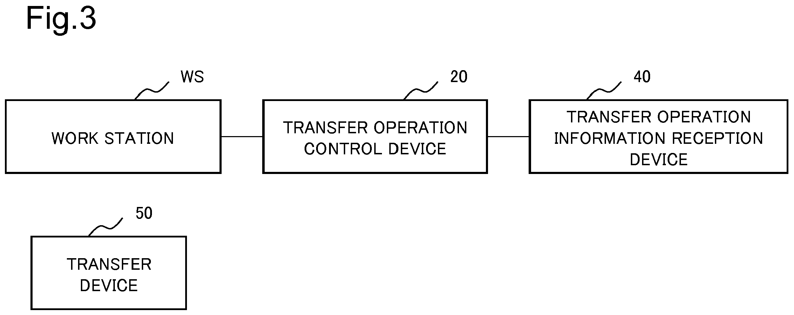

A configuration example of a transfer operation control system in the present example embodiment is shown in Fig. 3. The transfer operation control system in the present example embodiment includes a work station WS (hereinafter, referred to as a WS), the transfer operation control device 20, a transfer operation information reception device 40, and a transfer device 50. One or more transfer operation information reception devices 40 and one or more transfer devices 50 can be present in the transfer operation control system. Moreover, three or more WSs can be present in the transfer operation control system. Further, the transfer operation control device 20 and the transfer operation information reception device 40 may be one combined device.

The transfer device 50 is a device such as a transfer vehicle which performs a transfer operation from a WS being a transfer source to a WS being a transfer destination. The transfer operation information reception device 40 is a device which receives, from the transfer operation control device 20, an instruction related to a next transfer operation.

For example, when an operator rides on a transfer vehicle and then performs a transfer operation, the transfer device 50 is a transfer vehicle, and the transfer operation information reception device 40 is a display device mounted on the transfer vehicle, or an information terminal held by the operator. Moreover, when an operator performs transfer without using a transfer vehicle, the transfer device 50 is equivalent to an operator, and the transfer operation information reception device 40 is an information terminal held by the operator. Further, when an unmanned automatic transfer vehicle performs a transfer operation, the transfer device 50 is the unmanned automatic transfer vehicle, and the transfer operation information reception device 40 is a device which receives information related to a next transfer operation and then instructs the transfer device 50 of the next transfer operation. In addition, the transfer operation information reception device 40 may be a display device disposed inside or outside the transfer device 50, or inside or outside the WS.

In the present example embodiment, it is assumed that an operator holding the transfer operation information reception device 40 rides on a transfer vehicle (the transfer device 50), and performs a transfer operation.

A WS is a base for performing processing such as production and inspection. An actual form of a WS is a shop or the like grouping a work cell, a machine having a certain function, or the like.

A configuration example of a WS in the present example embodiment is shown in Fig. 4. A WS in the present example embodiment includes an input buffer, a processing unit, and an output buffer. The processing unit is a part which performs processing such as production and inspection. The input buffer and the output buffer are parts which each stores a stock of products in process. The product in process is transferred by the transfer device 50, and stored in the input buffer. Then, after processing such as production and inspection, the product in process is stored in the output buffer until transferred by the transfer device 50.

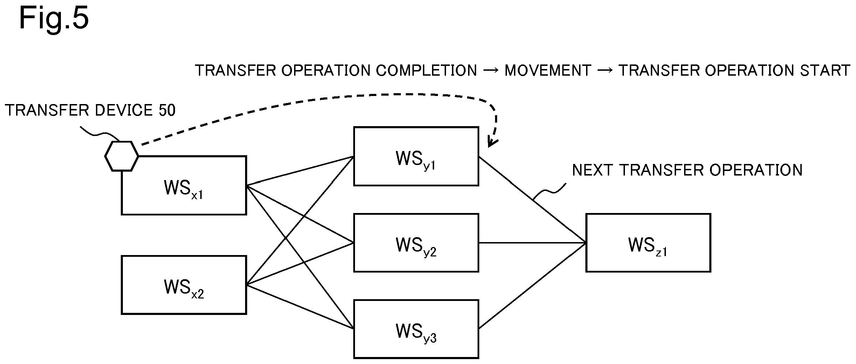

Next, a configuration example of an inter-WS network in the present example embodiment is shown in Fig. 5. In the present example embodiment, it is assumed that six WSs ($WS_{x1}$, $WS_{x2}$, $WS_{y1}$, $WS_{y2}$, $WS_{y3}$, and $WS_{z1}$) are present in a factory. Moreover, it is assumed that 9 links are present among the WSs. The link is equivalent to a pair of a transfer source WS and a transfer destination WS of a transfer operation by the transfer device 50.

Note that, in the present example embodiment, it is assumed that the transfer device 50 performs transfer from the $WS_{x1}$ and the $WS_{x2}$ to the $WS_{y1}$, the $WS_{y2}$, or the $WS_{y3}$, and from the $WS_{y1}$, the $WS_{y2}$, or the $WS_{y3}$ to the $WS_{z1}$, and does not perform transfer of any combination other than the above. Moreover, it is assumed that the transfer device 50 does not perform transfer upstream from the $WS_{x1}$ and the $WS_{x2}$, and transfer downstream from the $WS_{z1}$ either.

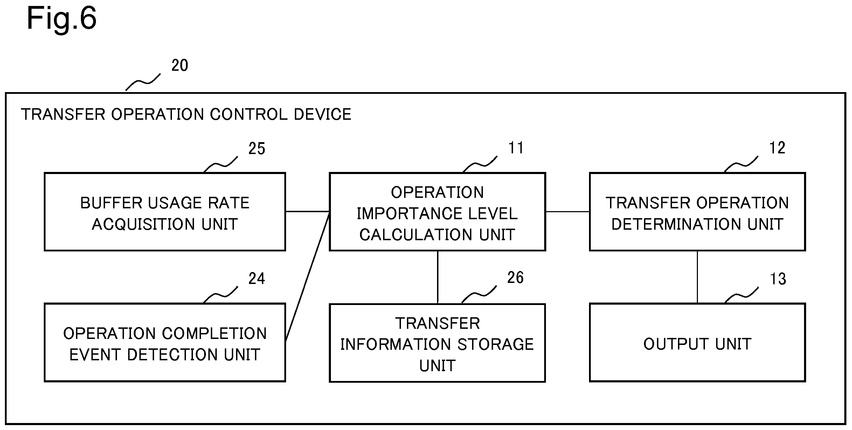

Next, a configuration example of the transfer operation control device 20 in the present example embodiment is shown in Fig. 6. The transfer operation control device 20 in the present example embodiment includes an operation importance level calculation unit 11, a transfer operation determination unit 12, an output unit 13, an operation completion event detection unit 24, a buffer usage rate acquisition unit 25, and a transfer information storage unit 26.

The operation completion event detection unit 24 is a part which detects completion of a transfer operation performed by the transfer device 50. The operation completion event detection unit 24 automatically detects completion of a transfer operation by, for example, an infrared, ultrasonic, or other passage sensor or laser range finder, camera image recognition, a radio frequency identification (RFID) attached to a product in process or the like, or the like. Alternatively, the operation completion event detection unit 24 may detect completion of a transfer operation, based on an operator's manual input such as button depression on the transfer operation information reception device 40.

Furthermore, an event with which the operation completion event detection unit 24 detects completion may be transfer operations of all transfer devices 50 (transfer operators, transfer vehicles, or the like), or may be a transfer operation of a predetermined transfer device 50. For example, only a transfer operation of a transfer device 50 being present in a predetermined region, or a transfer operation of a transfer device 50 transferring a predetermined product in process (e.g., a product of urgency) may be a target for which the operation completion event detection unit 24 detects completion.

The buffer usage rate acquisition unit 25 is a part which acquires a usage rate of an input buffer and a usage rate of an output buffer in each WS.

A usage rate of a buffer is, for example, an absolute value of a usage amount (a total number of stocks of products in process in the buffer), a ratio of a usage amount to a buffer volume, a difference between a buffer volume and a usage amount, a ratio of a usage amount to a predetermined reference value, a ratio of the number, amount, or weight of products in process to a buffer volume, or the like.

Furthermore, a target for which the buffer usage rate acquisition unit 25 acquires a usage rate may be a buffer of every WS, or may be only a predetermined buffer. For example, a buffer of a WS processing a particular product in process, a buffer of a WS having a small buffer size, a buffer of a WS having great processing capacity variation, or the like may be a target for which the buffer usage rate acquisition unit 25 acquires a usage rate.

Moreover, the buffer usage rate acquisition unit 25 may automatically detect a buffer usage rate by use of a RFID attached to a product in process, image recognition of a camera, a weight scale, or the like, or may detect a buffer usage rate, based on an operator's manual input. A conceivable method of a manual input is, for example, a method in which an operator causes a portable terminal (the transfer operation information reception device 40 or the like) to read a particular bar code each time a product in process is put in and out of a buffer, and information thereof is transmitted from the portable terminal to the buffer usage rate acquisition unit 25.

The transfer information storage unit 26 is a part which stores information relating to a transfer operation. In the present example embodiment, it is assumed that the transfer information storage unit 26 stores a transfer destination management table and a movement cost management table.

The transfer destination management table is information of a transfer operation (link) to be a candidate for transfer from which WS to which WS.

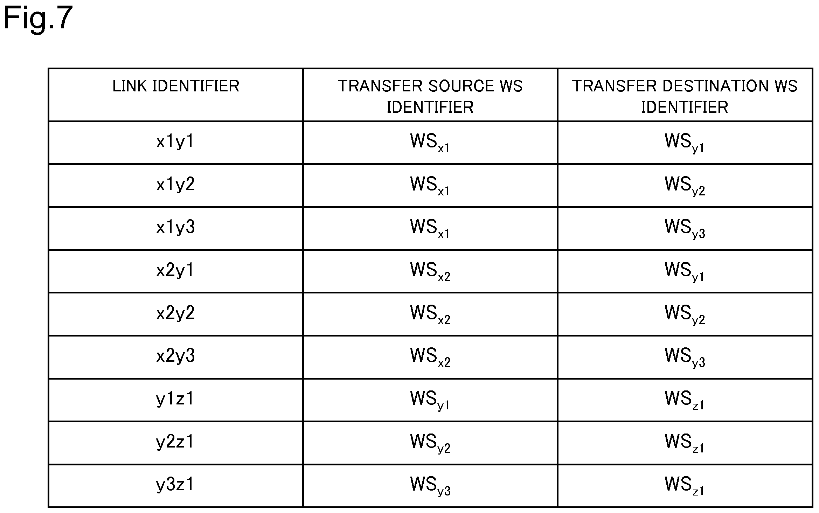

An example of a transfer destination management table in the present example embodiment is shown in Fig. 7. For each identifier of a link on an inter-WS network linking WSs with a link, the transfer information storage unit 26 stores, as a transfer destination management table, a transfer source WS identifier and a transfer destination WS identifier.

The movement cost management table is information about a movement cost required for movement between WSs.

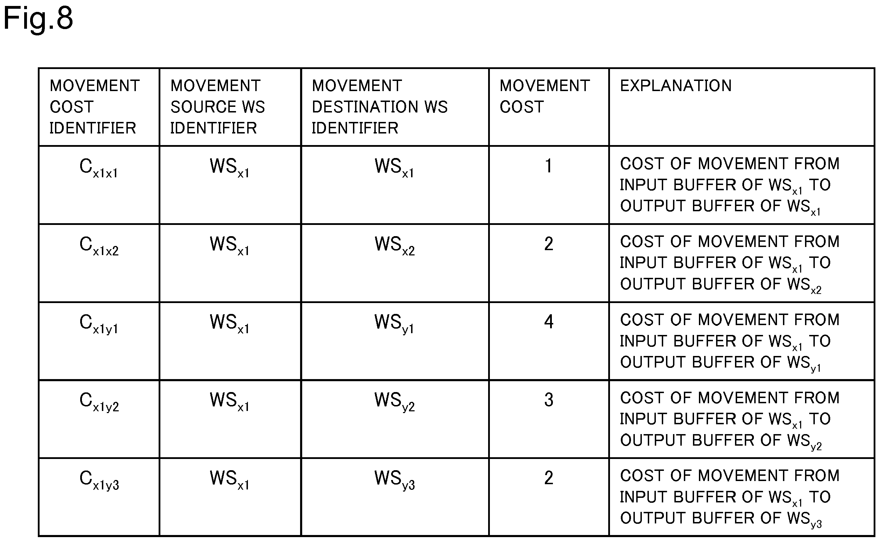

An example of a movement cost management table in the present example embodiment is shown in Fig. 8. For each movement cost identifier, the transfer information storage unit 26 stores, as a movement cost management table, a transfer source WS identifier, a transfer destination WS identifier, a movement cost (a required distance, a required time, and the like), a supplementary explanation, and the like. Each movement cost indicates a cost when the transfer device 50 moves from an input buffer (a location where a previous transfer operation is finished) of a WS indicated by the transfer source WS identifier to an output buffer (a location where a product in process is to be carried out in a next transfer operation) of a WS indicated by the transfer destination WS identifier.

A movement cost is a value calculated based on one or more criteria such as a distance of movement, a required time for movement, a kind of equipment (a cart or the like) required for a transfer operation, passage of a place interfering with another operation, ease of passage of a route during movement, and the like. A conceivable criterion for ease of passage of a route is, for example, whether to pass through a narrow place, whether a limited number of elevators need to be utilized for a slope and a step present along a route, or the like. Moreover, when a plurality of criteria are utilized for calculation of a movement cost, a value in which a calculation result by each criterion is multiplied by a predetermined weight and then added may be defined as a movement cost.

Furthermore, the transfer information storage unit 26 may store a transfer destination management table and a movement cost management table automatically formed by the transfer operation control device 20 or another device, based on, for example, a layout drawing or the like of a factory or a warehouse. Alternatively, the transfer information storage unit 26 may store a transfer destination management table and a movement cost management table input by an operator, a layout designer, or the like, or may store a transfer destination management table and a movement cost management table formed by combining a manual input and automatic formation.

The operation importance level calculation unit 11 is a part which calculates an importance level of each predetermined transfer operation, based on at least one or more of a usage rate of an output buffer of a WS being a transfer source of a transfer operation, and a usage rate of an input buffer of a WS being a transfer destination of the transfer operation. The importance level is a parameter indicating a priority degree of each transfer operation. The operation importance level calculation unit 11 in the present example embodiment calculates an importance level, based on a movement cost required for movement from a current location of the transfer device 50 to a WS being a transfer source, in addition to a usage rate of an output buffer of the WS being the transfer source and a usage rate of an input buffer of a WS being a transfer destination. In such a case that a distance between WSs is small, it is possible not to use a movement cost for calculation of an importance level.

In the present example embodiment, when the operation completion event detection unit 24 detects transfer operation completion, the operation importance level calculation unit 11 calculates an importance level for each transfer operation (link) targeted for importance level calculation.

The operation importance level calculation unit 11 in the present example embodiment calculates an importance level, based on a spatial deviations of a usage rate of an output buffer of a WS being a transfer source and a usage rate of an input buffer of a WS being a transfer destination, a difference, a ratio, or another evaluation function of movement costs, and the like.

When based on a usage rate of an output buffer of a transfer source WS, an importance level becomes greater as the usage rate of the output buffer of the transfer source WS is greater. Moreover, when based on a usage rate of an input buffer of a transfer destination WS, an importance level becomes greater as the usage rate of the input buffer of the transfer destination WS is smaller. Further, when based on a movement cost, an importance level becomes greater as the movement cost is smaller.

A spatial deviation of a buffer usage rate is a value calculated based on a difference, a ratio, another evaluation function, or the like of a usage rate of an output buffer of a transfer source WS and a usage rate of an input buffer of a transfer destination WS. As the usage rate of the output buffer of the transfer source WS is greater, and as the usage rate of the input buffer of the transfer destination WS is smaller, a spatial deviation of a buffer usage rate becomes greater. Further, a spatial deviation of a buffer usage rate may be a value considering spatial deviations of a buffer at one more upstream step and a buffer at one more downstream step.

Furthermore, when a usage rate of an input buffer being a transfer destination is not used for calculation of an importance level, a spatial deviation of a buffer usage rate may be a usage rate of an output buffer of a transfer source, or a value based on this. Moreover, when a usage rate of an output buffer being a transfer source is not used for calculation of an importance level, a spatial deviation of a buffer usage rate may be a usage rate of an input buffer of a transfer destination, or a value based on this.

One example of an importance level IM calculated by the operation importance level calculation unit 11 is shown in Equation 1.

$$IM = \frac{Oy - Iz}{Cxy} \qquad (\text{ Equation 1 })$$

Herein, $O_y$ is a usage rate of an output buffer of a transfer source $WS_y$, and $I_z$ is a usage rate of an input buffer of a transfer destination $WS_z$. Moreover, $C_{xy}$ is a movement cost from an output buffer (a place where a previous transfer operation is completed) of a movement source $WS_x$ to an input buffer (a place where a next transfer operation is started) of the movement destination $WS_y$ (a transfer source of a next transfer operation). In Equation 1, the importance level IM is calculated as a difference of buffer usage rates per movement cost.

Furthermore, another example of the importance level IM calculated by the operation importance level calculation unit 11 is shown in Equation 2.

$$IM = (Oy - Iz) - \alpha Cxy \qquad (\text{ Equation 2 })$$

Herein, $\alpha$ is a predetermined weight factor ($\alpha > 0$).

Note that a timing at which the operation importance level calculation unit 11 calculates an importance level may be a timing after elapse of a predetermined time since occurrence of an event of transfer operation completion, or may be a timing a predetermined time before a time when transfer operation completion is expected. When a certain time is required for a switch of operations, an importance level may be calculated at a timing considering this time. Moreover, an importance level may be recalculated, with an option of stopping a half-executed transfer operation according to a situation change such as some failure occurring in a factory or a warehouse (a manufacturing device or a transfer vehicle has failed, or an accident has occurred in a particular area), and then instructing about another transfer operation.

The transfer operation determination unit 12 is a part which determines, as a candidate for a transfer operation to be performed next, a transfer operation having a maximum importance level. The transfer operation determination unit 12 selects, as a next transfer operation, transfer operation having a maximum importance level from among importance levels of transfer operations (links) each calculated by the operation importance level calculation unit 11. Moreover, in this case, the transfer operation determination unit 12 may determine and then store, as next and subsequent transfer operations, a plurality of links having higher importance levels in order, and the number of calculation times of importance levels may be reduced.

The output unit 13 is a part which outputs transfer operation information including information related to the WS being the transfer source and the WS being the transfer destination for the determined transfer operation. In the present example embodiment, it is assumed that the output unit 13 outputs, as transfer operation information, a link identifier of a next transfer operation to the transfer operation information reception device 40.

Note that, the output unit 13 may simultaneously output a movement destination (transfer source) and a transfer destination, or may output a transfer destination after a movement destination. For example, the output unit 13 may output a transfer destination after the transfer device 50 arrives at a movement destination.

The transfer operation information reception device 40 receiving transfer operation information may display, on a display device on the transfer operation information reception device 40, places of a transfer source WS and a transfer destination WS, a route guidance, and the like. Alternatively, the transfer operation information reception device 40 may guide an operator of transfer operation information by voice, by using a voice output device (a headphone or the like) mounted on the transfer operation information reception device 40. Alternatively, for example, a line to be traced, a spatial coordinate of a movement destination location, and a marker to be a mark, or the like may be displayed on a display device on a transfer vehicle (the transfer device 50).

Then, the transfer device 50 (a transfer operator, a transfer vehicle, or the like) transfers a product in process, from an output buffer of a WS indicated by a transfer source WS identifier associated with transfer operation information (a link identifier), to an input buffer of a WS indicated by a transfer destination WS identifier associated with the link identifier.

By configuring the transfer operation control device 20 in this way, the transfer operation control device 20 calculates an importance level of each predetermined transfer operation. In this case, the transfer operation control device 20 calculates an importance level, based on at least one or more of a usage rate of an output buffer of a WS being a transfer source of a transfer operation, and a usage rate of an input buffer of a WS being a transfer destination of the transfer operation. Then, the transfer operation control device 20 determines, as a candidate for a transfer operation to be performed next, a transfer operation having a maximum importance level. Thereby, even when a usage rate of a buffer varies due to great fluctuation in processing speed at each WS, a next transfer operation can be dynamically determined depending on the usage rate of the buffer. Thus, determination of operation contents when fluctuation in processing speed is great can be more appropriately performed.

Moreover, when based on a usage rate of an output buffer of a transfer source WS, an importance level is greater as the usage rate of the output buffer of the transfer source WS is greater, and when based on a usage rate of an input buffer of a transfer destination WS, an importance level is greater as the usage rate of the input buffer of the transfer destination WS is smaller.

Thus, when an importance level is based on a usage rate of an output buffer of a transfer source WS, the transfer device 50 performs a transfer operation from a transfer source WS having a great usage rate of an output buffer. Moreover, when an importance level is based on a usage rate of an input buffer of a transfer destination WS, the transfer device 50 performs a transfer operation to a transfer destination WS having a small usage rate of an input buffer. In this way, the transfer device 50 operates in such a way as to reduce a spatial deviation of a buffer usage rate.

For example, when a large number of products in process are accumulated in an output buffer of a certain WS, but an input buffer of a transfer destination tends to be empty, an unnecessary wait time is produced for an operator, an operation device, or the like in a WS of the transfer destination, an operating rate is thus lowered, and productivity is decreased. Moreover, for example, products in process are transferred from an output buffer of a certain WS only to a nearby WS, and thus, an input buffer of a WS being a transfer destination tends to be full, whereas, when products in process are not much transferred to another slightly far WS, an input buffer of the slightly far WS tends to be empty. In such a case as well, an unnecessary wait time is produced for an operator, an operation device, or the like in a slightly far WS, an operating rate is thus lowered, and productivity is decreased.

In contrast, the transfer operation control device 20 in the present example embodiment operates a transfer device in such a way as to reduce a spatial deviation of a buffer usage rate. Thus, it becomes possible to reduce a decrease in productivity in an overall production system.

Furthermore, the transfer operation control device 20 in the present example embodiment uses, for calculation of an importance level, a movement cost in addition to a usage rate of a buffer. This enables a next transfer operation to be determined in view of the movement cost as well.

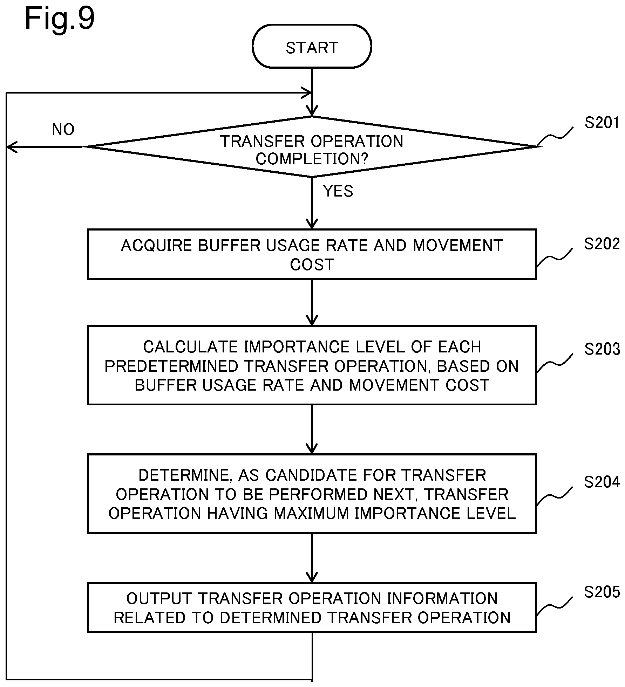

Next, an operation example of the transfer operation control device 20 in the present example embodiment is shown in Fig. 9.

In the present example embodiment, the transfer operation control device 20 determines a next transfer operation each time one transfer operation is completed.

First, when the operation completion event detection unit 24 detects completion of a transfer operation (previous transfer operation) of the transfer device 50 (YES in step S201), the operation importance level calculation unit 11 acquires a buffer usage rate and a movement cost related to a transfer operation targeted for calculation of an importance level (step S202).

In step S202, the operation importance level calculation unit 11 first acquires, from a transfer destination management table of the transfer information storage unit 26, a transfer source WS identifier and a transfer destination WS identifier which are associated with a link identifier of a transfer operation (link) targeted for calculation of an importance level. Then, the operation importance level calculation unit 11 acquires, from the buffer usage rate acquisition unit 25, usage rates of an output buffer of a transfer source WS and an input buffer of a transfer destination WS which are each associated with each link. Note that the buffer usage rate acquisition unit 25 is assumed to acquire usage rates of an output buffer and an input buffer of respective WSs at a predetermined timing.

Moreover, in step S202, the operation importance level calculation unit 11 acquires, from a movement cost management table of the transfer information storage unit 26, a movement cost of a link designating a current location as a transfer source WS. Note that the operation importance level calculation unit 11 may simultaneously perform acquisition of a usage rate of a buffer and acquisition of a movement cost, or may perform either acquisition first.

Then, the operation importance level calculation unit 11 calculates an importance level of each transfer operation targeted for calculation of an importance level, based on the buffer usage rate and the movement cost acquired in step S202 (step S203).

Next, the transfer operation determination unit 12 determines, as a next transfer operation, a transfer operation (link) having a maximum importance level from among importance levels calculated by the operation importance level calculation unit 11 (step S204).

Then, the output unit 13 outputs, to the transfer operation information reception device 40 or the like, transfer operation information (information related to a transfer source WS and a transfer destination WS) of the transfer operation determined by the transfer operation determination unit 12 as a candidate for a next transfer operation (step S205).

Next, an operation example of the transfer operation control device 20 in the present example embodiment is more specifically described.

First, it is assumed that a configuration of a WS network in the present example embodiment is as in Fig. 5. Moreover, it is assumed that the transfer information storage unit 26 of the transfer operation control device 20 stores a transfer destination management table in Fig. 7 and a movement cost management table in Fig. 8. Further, it is assumed that targets for importance level calculation are nine links in Fig. 7.

Herein, a case where the transfer device 50 completes transfer to an input buffer of a $WS_{x1}$, and the transfer operation control device 20 determines a next transfer operation of the transfer device 50 is described.

First, when the operation completion event detection unit 24 of the transfer operation control device 20 detects that the transfer device 50 completes a previous transfer operation (YES in step S201 of Fig. 9), the operation importance level calculation unit 11 acquires a buffer usage rate and a movement cost (step S202). Then, the operation importance level calculation unit 11 calculates an importance level for each link identifier in Fig. 7, based on the buffer usage rate and the movement cost (step S203).

For example, when the operation importance level calculation unit 11 calculates an importance level $IM_{y1z1}$ of a transfer operation from the $WS_{y1}$ to the $WS_{z1}$, and in this case, calculation of an importance level is performed by Equation 1, the importance level $IM_{y1z1}$ is calculated by Equation 3.

$$IM_{y1z1} = \frac{O_{y1} - I_{z1}}{C_{x1y1}} \qquad (\text{Equation 3})$$

Herein, $O_{y1}$ is a usage rate of an output buffer of the $WS_{y1}$ (transfer source), $I_{z1}$ is a usage rate of an input buffer of the $WS_{z1}$ (transfer destination), and $C_{x1y1}$ is a movement cost of movement from a current location (the input buffer of the $WS_{x1}$) to the $WS_{y1}$ being a movement destination (transfer source).

The operation importance level calculation unit 11 is able to acquire a movement cost from the movement cost management table (Fig. 8) of the transfer information storage unit 26. Moreover, the operation importance level calculation unit 11 is able to acquire a buffer usage rate from the buffer usage rate acquisition unit 25.

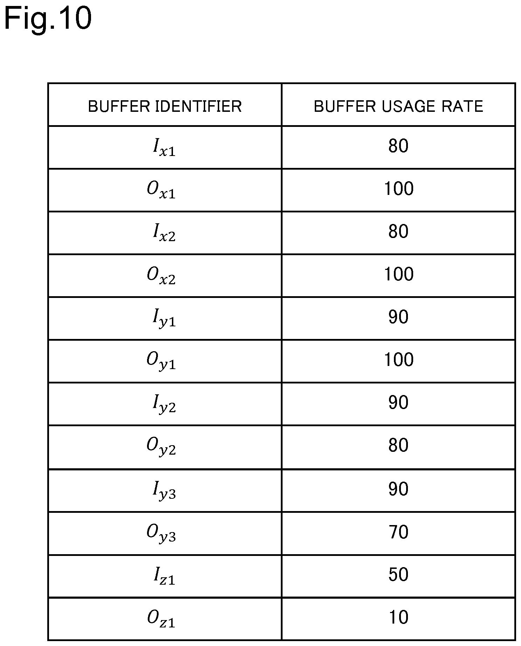

An example of a buffer usage rate acquired from each WS by the buffer usage rate acquisition unit 25 is shown in Fig. 10. I of a buffer identifier indicates an input buffer, O indicates an output buffer, and, for example, $I_{x1}$ indicates that an input buffer is an input buffer of the $WS_{x1}$. Note that, in this example, a usage rate of a buffer is assumed to be the number of accumulated products in process.

In this case, when the operation importance level calculation unit 11 calculates the importance level $IM_{y1z1}$ of a transfer operation from the $WS_{y1}$ to the $WS_{z1}$ by Equation 3, the importance level $IM_{y1z1}$ is (100-50)/4=12.5.

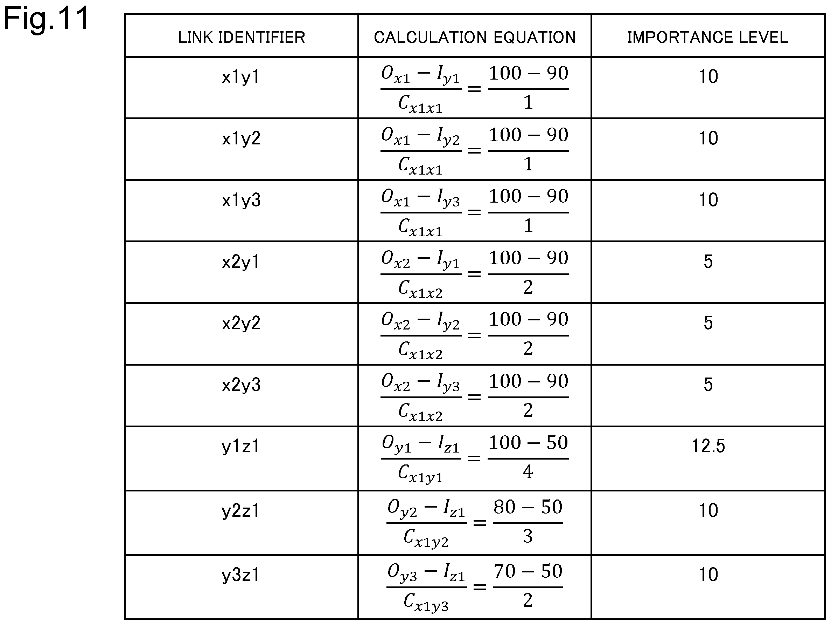

Similarly to the link of a link identifier y1z1, the operation importance level calculation unit 11 calculates an importance level for each of links of link identifiers x1y1, x1y2, x1y3, x2y1, x2y2, x2y3, y2z1, and y3z1. An example of results thereof is shown in Fig. 11.

Then, the transfer operation determination unit 12 determines, as a candidate for a next transfer operation, a link having a maximum importance level (step S204). In a case of the example of Fig. 11, a link having a maximum importance level is the y1z1. Thus, the transfer operation determination unit 12 determines, as a next transfer operation, a link of the link identifier y1z1.

Next, the output unit 13 outputs, to the transfer operation information reception device 40, information that a candidate transfer source WS of a next transfer operation is the $WS_{y1}$, and a transfer destination WS is the $WS_{z1}$ (step S205).

Then, for example, a transfer operator finds out a transfer source WS and a transfer destination WS by checking display of the transfer operation information reception device 40, moves the transfer device 50 (transfer vehicle) to the output buffer of the $WS_{y1}$, and starts a transfer operation to the input buffer of the $WS_{z1}$.

Herein, when a movement cost is a movement distance, the link of the link identifier y1z1 has a longest movement distance (the $WS_{y1}$ from the $WS_{x1}$), according to the movement management table in Fig. 8. However, according to a buffer usage rate in Fig. 10, the link of the link identifier y1z1 has a great difference between a usage rate of an output buffer of a transfer source WS and a usage rate of an input buffer of a transfer destination WS. Thus, since a difference between an accumulation amount of things to be transferred and a free space of a transfer destination is relatively great, the link of the link identifier y1z1 is determined as a next transfer operation.

By operating in this way, the transfer operation control device 20 calculates an importance level of each predetermined transfer operation. In this case, the transfer operation control device 20 calculates an importance level, based on at least one or more of a usage rate of an output buffer of a WS being a transfer source of a transfer operation, and a usage rate of an input buffer of a WS being a transfer destination of the transfer operation. Then, the transfer operation control device 20 determines, as a candidate for a transfer operation to be performed next, a transfer operation having a maximum importance level. Thereby, even when a usage rate of a buffer varies due to great fluctuation in processing speed at each WS, a next transfer operation can be dynamically determined depending on the usage rate of the buffer. Thus, determination of operation contents when fluctuation in processing speed is great can be more appropriately performed.

As described above, in the second example embodiment of the present invention, the transfer operation control device 20 calculates an importance level of each predetermined transfer operation. In this case, the transfer operation control device 20 calculates an importance level, based on at least one or more of a usage rate of an output buffer of a WS being a transfer source of a transfer operation, and a usage rate of an input buffer of a WS being a transfer destination of the transfer operation. Then, the transfer operation control device 20 determines, as a candidate for a transfer operation to be performed next, a transfer operation having a maximum importance level. Thereby, even when a usage rate of a buffer varies due to great fluctuation in processing speed at each WS, a next transfer operation can be dynamically determined depending on the usage rate of the buffer. Thus, determination of operation contents when fluctuation in processing speed is great can be more appropriately performed.

Furthermore, when based on a usage rate of an output buffer of a transfer source WS, an importance level is greater as the usage rate of the output buffer of the transfer source WS is greater, and when based on a usage rate of an input buffer of a transfer destination WS, an importance level is greater as the usage rate of the input buffer of the transfer destination WS is smaller. Thus, the transfer operation control device 20 in the present example embodiment operates a transfer device in such a way as to reduce a spatial deviation of a buffer usage rate, and becomes able to reduce a decrease in productivity in an overall production system.

Still further, the transfer operation control device 20 in the present example embodiment uses, for calculation of an importance level, a movement cost in addition to a usage rate of a buffer. This enables a next transfer operation to be determined in view of the movement cost as well.

[Hardware Configuration Example]

A configuration example of a hardware resource which implements, by use of one information processing device (computer), the transfer operation control device (10, 20) in each example embodiment of the present invention described above is described. Note that the transfer operation control device may be physically or functionally implemented by use of at least two information processing devices. Moreover, the transfer operation control device may be implemented as a dedicated device. Further, only some functions of the transfer operation control device may be implemented by use of an information processing device.

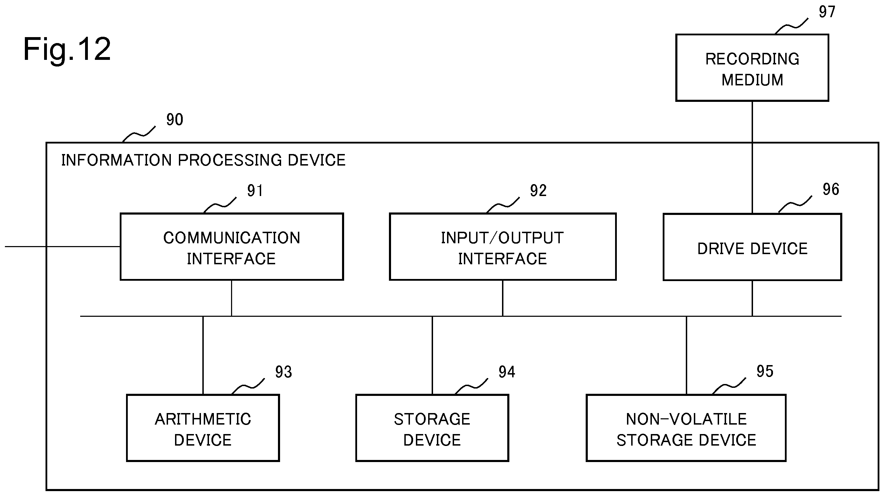

Fig. 12 is a diagram schematically showing a hardware configuration example of an information processing device being capable of implementing the transfer operation control device in each example embodiment of the present invention. An information processing device 90 includes a communication interface 91, an input/output interface 92, an arithmetic device 93, a storage device 94, a non-volatile storage device 95, and a drive device 96.

The communication interface 91 is a communication means with which the transfer operation control device in each example embodiment communicates with an external device in a wired or wireless way. Note that, when the transfer operation control device is implemented by use of at least two information processing devices, the devices may be connected to each other in such a way as to be able to mutually communicate via the communication interface 91.

The input/output interface 92 is a man machine interface such as a keyboard being one example of an input device, or a display as an output device.

The arithmetic device 93 is an arithmetic processing device such as a general-purpose central processing unit (CPU) or a microprocessor. The arithmetic device 93 can read, for example, various programs stored in the non-volatile storage device 95, into the storage device 94, and execute processing in accordance with the read program.

The storage device 94 is a memory device such as a random access memory (RAM) which can be referred to from the arithmetic device 93, and stores a program, various data, and the like. The storage device 94 may be a volatile memory device.

The non-volatile storage device 95 is a non-volatile storage device such as a read only memory (ROM), a flash memory, or the like, and can store various programs, data, and the like.

The drive device 96 is, for example, a device which processes reading and writing of data from and into a recording medium 97 described later.

The recording medium 97 is any recording medium such as an optical disk, a magneto-optical disk, a semiconductor flash memory or the like being capable of recording data.

Each example embodiment of the present invention may be implemented by, for example, configuring a transfer operation control device by the information processing device 90 exemplified in Fig. 12, and supplying this transfer operation control device with a program being capable of implementing a function described in each of the example embodiments described above.

In this case, the arithmetic device 93 executes the program supplied to the transfer operation control device, and thereby, an example embodiment can be implemented. Moreover, not all but some of the functions of the transfer operation control device can be configured by the information processing device 90.

Furthermore, the present invention may be configured in such a way that the program described above is recorded in the recording medium 97, and appropriately stored in the non-volatile storage device 95 at a shipment stage, an operation stage, or the like of the transfer operation control device. Note that, in this case, a method of installing the program described above into the transfer operation control device by utilizing a suitable jig at a manufacturing stage before shipment, an operation stage, or the like may be adopted as a method of supplying the program described above. Moreover, a general procedure such as a method of externally downloading the program described above via a communication line such as the Internet may be adopted as a method of supplying the program described above.

The whole or part of the example embodiments disclosed above can be described as, but not limited to, the following supplementary notes.

(Supplementary note 1)

A transfer operation control device comprising:

an operation importance level calculation means for calculating an importance level of each predetermined transfer operation, based on at least one or more of a usage rate of an output buffer of a work station being a transfer source of the transfer operation, and the usage rate of an input buffer of the work station being a transfer destination of the transfer operation;
a transfer operation determination means for determining, as a candidate for the transfer operation to be performed next, the transfer operation having the maximum importance level; and
an output means for outputting transfer operation information including information of the work station being the transfer source and the work station being the transfer destination for the determined transfer operation.

(Supplementary note 2)

The transfer operation control device according to supplementary note 1, wherein,
when based on the usage rate of the output buffer, the importance level becomes smaller as the usage rate of the output buffer is greater, and when based on the usage rate of the input buffer, the importance level becomes smaller as the usage rate of the input buffer is smaller.

(Supplementary note 3)

The transfer operation control device according to supplementary note 1 or 2, wherein
the operation importance level calculation means uses, for the calculation of the importance level, at least one or more of a difference or a ratio between the usage rate of the output buffer of the work station being the transfer source and the usage rate of the input buffer of the work station being the transfer destination, and a difference or a ratio between the usage rate of the upstream output buffer and the usage rate of the downstream input buffer.

(Supplementary note 4)

The transfer operation control device according to any one of supplementary notes 1 to 3, wherein the usage rate is based on at least one or more of an absolute value of a usage amount, a ratio of the usage amount to a buffer volume, a difference between the buffer volume and the usage amount, a ratio of the usage amount to a predetermined reference value, and a ratio of a number, amount, or weight of products in process to the buffer volume.

(Supplementary note 5)

The transfer operation control device according to any one of supplementary notes 1 to 4, wherein the operation importance level calculation means further performs the calculation of the importance level, based on a movement cost required for movement from a current location of a transfer device to the work station being the transfer source.

(Supplementary note 6)

The transfer operation control device according to supplementary note 5, wherein the importance level becomes smaller as the movement cost is greater.

(Supplementary note 7)

The transfer operation control device according to supplementary note 5 or 6, wherein the movement cost is a value, based on one or more criteria being a distance of the movement, a required time for the movement, a kind of equipment required for the transfer operation, passage of a place interfering with another operation, and ease of passage of a route during the movement.

(Supplementary note 8)

The transfer operation control device according to any one of supplementary notes 1 to 7, further comprising an operation completion event detection means for detecting completion of the transfer operation, wherein the operation importance level calculation means performs the calculation of the importance level at one or more timings being a timing after elapse of a predetermined time since the detection of the completion of the transfer operation, a timing a predetermined time before a time when the completion of the transfer operation is expected, and a timing when a situation change occurs.

(Supplementary note 9)

A transfer operation control system comprising:

the transfer operation control device according to any one of supplementary notes 1 to 8; and
the work station.

(Supplementary note 10)

A transfer operation control method comprising:

calculating an importance level of each predetermined transfer operation, based on at least one or more of a usage rate of an output buffer of a work station being a transfer source of the transfer operation, and the usage rate of an input buffer of the work station being a transfer destination of the transfer operation;
determining, as a candidate for the transfer operation to be performed next, the transfer operation having the maximum importance level; and
outputting transfer operation information including information of the work station being the transfer source and the work station being the transfer destination for the determined transfer operation.

(Supplementary note 11)

The transfer operation control method according to supplementary note 10, wherein, when based on the usage rate of the output buffer, the importance level becomes smaller as the usage rate of the output buffer is greater, and when based on the usage rate of the input buffer, the importance level becomes smaller as the usage rate of the input buffer is smaller.

(Supplementary note 12)

The transfer operation control method according to supplementary note 10 or 11, further comprising using, for the calculation of the importance level, at least one or more of a difference or a ratio between the usage rate of the output buffer of the work station being the transfer source and the usage rate of the input buffer of the work station being the transfer destination, and a difference or a ratio between the usage rate of the upstream output buffer and the usage rate of the downstream input buffer.

(Supplementary note 13)

The transfer operation control method according to any one of supplementary notes 10 to 12, wherein the usage rate is based on at least one or more of an absolute value of a usage amount, a ratio of the usage amount to a buffer volume, a difference between the buffer volume and the usage amount, a ratio of the usage amount to a predetermined reference value, and a ratio of a number, amount, or weight of products in process to the buffer volume.

(Supplementary note 14)

The transfer operation control method according to any one of supplementary notes 10 to 13, further comprising performing the calculation of the importance level, based on a movement cost required for movement from a current location of a transfer device to the work station being the transfer source.

(Supplementary note 15)

The transfer operation control method according to supplementary note 14, wherein the importance level becomes smaller as the movement cost is greater.

(Supplementary note 16)

The transfer operation control method according to supplementary note 14 or 15, wherein the movement cost is a value, based on one or more criteria being a distance of the movement, a required time for the movement, a kind of equipment required for the transfer operation, passage of a place interfering with another operation, and ease of passage of a route during the movement.

(Supplementary note 17)

The transfer operation control method according to any one of supplementary notes 10 to 16, further comprising:

detecting completion of the transfer operation; and
performing the calculation of the importance level at one or more timings being a timing after elapse of a predetermined time since the detection of the completion of the transfer operation, a timing a predetermined time before a time when the completion of the transfer operation is expected, and a timing when a situation change occurs.

(Supplementary note 18)

A computer readable recording medium recorded with a transfer operation control program causing a computer to execute:

an operation importance level calculation function of calculating an importance level of each predetermined transfer operation, based on at least one or more of a usage rate of an output buffer of a work station being a transfer source of the transfer operation, and the usage rate of an input buffer of the work station being a transfer destination of the transfer operation;
a transfer operation determination function of determining, as a candidate for the transfer operation to be performed next, the transfer operation having the maximum importance level; and
an output function of outputting transfer operation information including information of the work station being the transfer source and the work station being the transfer destination for the determined transfer operation.

(Supplementary note 19)

The computer readable recording medium recorded with the transfer operation control program according to supplementary note 18, wherein,
when based on the usage rate of the output buffer, the importance level becomes smaller as the usage rate of the output buffer is greater, and when based on the usage rate of the input buffer, the importance level becomes smaller as the usage rate of the input buffer is smaller.

(Supplementary note 20)

The computer readable recording medium recorded with the transfer operation control program according to supplementary note 18 or 19, wherein
the operation importance level calculation function uses, for the calculation of the importance level, at least one or more of a difference or a ratio between the usage rate of the output buffer of the work station being the transfer source and the usage rate of the input buffer of the work station being the transfer destination, and a difference or a ratio between the usage rate of the upstream output buffer and the usage rate of the downstream input buffer.

(Supplementary note 21)

The computer readable recording medium recorded with the transfer operation control program according to any one of supplementary notes 18 to 20, wherein
the usage rate is based on at least one or more of an absolute value of a usage amount, a ratio of the usage amount to a buffer volume, a difference between the buffer volume and the usage amount, a ratio of the usage amount to a predetermined reference value, and a ratio of a number, amount, or weight of products in process to the buffer volume.

(Supplementary note 22)

The computer readable recording medium recorded with the transfer operation control program according to any one of supplementary notes 18 to 21, wherein
the operation importance level calculation function further performs the calculation of the importance level, based on a movement cost required for movement from a current location of a transfer device to the work station being the transfer source.

(Supplementary note 23)

The computer readable recording medium recorded with the transfer operation control program according to supplementary note 22, wherein
the importance level becomes smaller as the movement cost is greater.

(Supplementary note 24)

The computer readable recording medium recorded with the transfer operation control program according to supplementary note 22 or 23, wherein
the movement cost is a value based on one or more criteria being a distance of the movement, a required time for the movement, a kind of equipment required for the transfer operation, passage of a place interfering with another operation, and ease of passage of a route during the movement.

(Supplementary note 25)

The computer readable recording medium recorded with the transfer operation control program according to any one of supplementary notes 18 to 24, further causing a computer to execute
an operation completion event detection function of detecting completion of the transfer operation, wherein
the operation importance level calculation function performs the calculation of the importance level at one or more timings being a timing after elapse of a predetermined time since the detection of the completion of the transfer operation, a timing a predetermined time before a time when the completion of the transfer operation is expected, and a timing when a situation change occurs.
While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

[Reference signs List]

| | |
|---|---|
| 10, 20 | Transfer operation control device |
| 11 | Operation importance level calculation unit |
| 12 | Transfer operation determination unit |
| 13 | Output unit |
| 24 | Operation completion event detection unit |
| 25 | Buffer usage rate acquisition unit |
| 26 | Transfer information storage unit |
| 40 | Transfer operation information reception device |
| 50 | Transfer device |
| 90 | Information processing device |
| 91 | Communication interface |
| 92 | Input/output interface |
| 93 | Arithmetic device |
| 94 | Storage device |
| 95 | Non-volatile storage device |
| 96 | Drive device |
| 97 | Recording medium |

**Claims**

1. A transfer operation control device comprising:

    an operation importance level calculation means for calculating an importance level of each predetermined transfer operation, based on at least one or more of a usage rate of an output buffer of a work station being a transfer source of the transfer operation, and the usage rate of an input buffer of the work station being a transfer destination of the transfer operation;
    a transfer operation determination means for determining, as a candidate for the transfer operation to be performed next, the transfer operation having the maximum importance level; and
    an output means for outputting transfer operation information including information of the work station being the transfer source and the work station being the transfer destination for the determined transfer operation.

2. The transfer operation control device according to claim 1, wherein,
   when based on the usage rate of the output buffer, the importance level becomes smaller as the usage rate of the output buffer is greater, and when based on the usage rate of the input buffer, the importance level becomes smaller as the usage rate of the input buffer is smaller.

3. The transfer operation control device according to claim 1 or 2, wherein
   the operation importance level calculation means uses, for the calculation of the importance level, at least one or more of a difference or a ratio between the usage rate of the output buffer of the work station being the transfer source and the usage rate of the input buffer of the work station being the transfer destination, and a difference or a ratio between the usage rate of the upstream output buffer and the usage rate of the downstream input buffer.

4. The transfer operation control device according to any one of claims 1 to 3, wherein
   the usage rate is based on at least one or more of an absolute value of a usage amount, a ratio of the usage amount to a buffer volume, a difference between the buffer volume and the usage amount, a ratio of the usage amount to a predetermined reference value, and a ratio of a number, amount, or weight of products in process to the buffer volume.

5. The transfer operation control device according to any one of claims 1 to 4, wherein
   the operation importance level calculation means further performs the calculation of the importance level, based on a movement cost required for movement from a current location of a transfer device to the work station being the transfer source.

6. The transfer operation control device according to claim 5, wherein
the importance level becomes smaller as the movement cost is greater.

7. The transfer operation control device according to claim 5 or 6, wherein
the movement cost is a value, based on one or more criteria being a distance of the movement, a required time for the movement, a kind of equipment required for the transfer operation, passage of a place interfering with another operation, and ease of passage of a route during the movement.

8. The transfer operation control device according to any one of claims 1 to 7, further comprising
an operation completion event detection means for detecting completion of the transfer operation, wherein
the operation importance level calculation means performs the calculation of the importance level at one or more timings being a timing after elapse of a predetermined time since the detection of the completion of the transfer operation, a timing a predetermined time before a time when the completion of the transfer operation is expected, and a timing when a situation change occurs.

9. A transfer operation control system comprising:

the transfer operation control device according to any one of claims 1 to 8; and
the work station.

10. A transfer operation control method comprising:

calculating an importance level of each predetermined transfer operation, based on at least one or more of a usage rate of an output buffer of a work station being a transfer source of the transfer operation, and the usage rate of an input buffer of the work station being a transfer destination of the transfer operation;
determining, as a candidate for the transfer operation to be performed next, the transfer operation having the maximum importance level; and
outputting transfer operation information including information of the work station being the transfer source and the work station being the transfer destination for the determined transfer operation.

11. The transfer operation control method according to claim 10, wherein,
when based on the usage rate of the output buffer, the importance level becomes smaller as the usage rate of the output buffer is greater, and when based on the usage rate of the input buffer, the importance level becomes smaller as the usage rate of the input buffer is smaller.

12. The transfer operation control method according to claim 10 or 11, further comprising
using, for the calculation of the importance level, at least one or more of a difference or a ratio between the usage rate of the output buffer of the work station being the transfer source and the usage rate of the input buffer of the work station being the transfer destination, and a difference or a ratio between the usage rate of the upstream output buffer and the usage rate of the downstream input buffer.

13. The transfer operation control method according to any one of claims 10 to 12, wherein
the usage rate is based on at least one or more of an absolute value of a usage amount, a ratio of the usage amount to a buffer volume, a difference between the buffer volume and the usage amount, a ratio of the usage amount to a predetermined reference value, and a ratio of a number, amount, or weight of products in process to the buffer volume.

14. The transfer operation control method according to any one of claims 10 to 13, further comprising
performing the calculation of the importance level, based on a movement cost required for movement from a current location of a transfer device to the work station being the transfer source.

15. The transfer operation control method according to claim 14, wherein
the importance level becomes smaller as the movement cost is greater.

16. The transfer operation control method according to claim 14 or 15, wherein

the movement cost is a value, based on one or more criteria being a distance of the movement, a required time for the movement, a kind of equipment required for the transfer operation, passage of a place interfering with another operation, and ease of passage of a route during the movement.

17. The transfer operation control method according to any one of claims 10 to 16, further comprising:

detecting completion of the transfer operation; and
performing the calculation of the importance level at one or more timings being a timing after elapse of a predetermined time since the detection of the completion of the transfer operation, a timing a predetermined time before a time when the completion of the transfer operation is expected, and a timing when a situation change occurs.

18. A computer readable recording medium recorded with a transfer operation control program causing a computer to execute:

an operation importance level calculation function of calculating an importance level of each predetermined transfer operation, based on at least one or more of a usage rate of an output buffer of a work station being a transfer source of the transfer operation, and the usage rate of an input buffer of the work station being a transfer destination of the transfer operation;
a transfer operation determination function of determining, as a candidate for the transfer operation to be performed next, the transfer operation having the maximum importance level; and
an output function of outputting transfer operation information including information of the work station being the transfer source and the work station being the transfer destination for the determined transfer operation.

19. The computer readable recording medium recorded with the transfer operation control program according to claim 18, wherein,
when based on the usage rate of the output buffer, the importance level becomes smaller as the usage rate of the output buffer is greater, and when based on the usage rate of the input buffer, the importance level becomes smaller as the usage rate of the input buffer is smaller.

20. The computer readable recording medium recorded with the transfer operation control program according to claim 18 or 19, wherein
the operation importance level calculation function uses, for the calculation of the importance level, at least one or more of a difference or a ratio between the usage rate of the output buffer of the work station being the transfer source and the usage rate of the input buffer of the work station being the transfer destination, and a difference or a ratio between the usage rate of the upstream output buffer and the usage rate of the downstream input buffer.

21. The computer readable recording medium recorded with the transfer operation control program according to any one of claims 18 to 20, wherein
the usage rate is based on at least one or more of an absolute value of a usage amount, a ratio of the usage amount to a buffer volume, a difference between the buffer volume and the usage amount, a ratio of the usage amount to a predetermined reference value, and a ratio of a number, amount, or weight of products in process to the buffer volume.

22. The computer readable recording medium recorded with the transfer operation control program according to any one of claims 18 to 21, wherein
the operation importance level calculation function further performs the calculation of the importance level, based on a movement cost required for movement from a current location of a transfer device to the work station being the transfer source.

23. The computer readable recording medium recorded with the transfer operation control program according to claim 22, wherein
the importance level becomes smaller as the movement cost is greater.

24. The computer readable recording medium recorded with the transfer operation control program according to claim 22 or 23, wherein
the movement cost is a value based on one or more criteria being a distance of the movement, a required time for the movement, a kind of equipment required for the transfer operation, passage of a place interfering with another operation, and ease of passage of a route during the movement.

25. The computer readable recording medium recorded with the transfer operation control program according to any one of claims 18 to 24, further causing a computer to execute
an operation completion event detection function of detecting completion of the transfer operation, wherein
the operation importance level calculation function performs the calculation of the importance level at one or more timings being a timing after elapse of a predetermined time since the detection of the completion of the transfer operation, a timing a predetermined time before a time when the completion of the transfer operation is expected, and a timing when a situation change occurs.

Fig.1

# Fig.2

```
      ┌─────────────┐
      │    START    │
      └──────┬──────┘
             │
             ▼
┌────────────────────────────────────┐
│   CALCULATE IMPORTANCE LEVEL OF EACH │   S101
│ PREDETERMINED TRANSFER OPERATION, BASED ON │
│         BUFFER USAGE RATE            │
└──────────────────┬─────────────────┘
                   │
                   ▼
┌────────────────────────────────────┐
│   DETERMINE, AS CANDIDATE FOR TRANSFER │   S102
│  OPERATION TO BE PERFORMED NEXT, TRANSFER │
│ OPERATION HAVING MAXIMUM IMPORTANCE LEVEL │
└──────────────────┬─────────────────┘
                   │
                   ▼
┌────────────────────────────────────┐   S103
│   OUTPUT TRANSFER OPERATION INFORMATION │
│  RELATED TO DETERMINED TRANSFER OPERATION │
└──────────────────┬─────────────────┘
                   │
                   ▼
           ┌─────────────┐
           │     END     │
           └─────────────┘
```

EP 3 611 674 A1

Fig.3

```
                    ╭╮ WS              ╭╮ 20                   ╭╮ 40
  ┌──────────────────┐   ┌──────────────────┐   ┌──────────────────────┐
  │                  │   │ TRANSFER OPERATION│   │  TRANSFER OPERATION  │
  │   WORK STATION   │───│  CONTROL DEVICE   │───│ INFORMATION RECEPTION│
  │                  │   │                   │   │       DEVICE         │
  └──────────────────┘   └──────────────────┘   └──────────────────────┘

            ╭╮ 50
  ┌──────────────────┐
  │     TRANSFER     │
  │      DEVICE      │
  └──────────────────┘
```

Fig.4

WS

WORK STATION

| INPUT BUFFER | PROCESSING UNIT | OUTPUT BUFFER |

# Fig.5

TRANSFER OPERATION COMPLETION → MOVEMENT → TRANSFER OPERATION START

TRANSFER DEVICE 50

$WS_{x1}$

$WS_{x2}$

$WS_{y1}$

$WS_{y2}$

$WS_{y3}$

NEXT TRANSFER OPERATION

$WS_{z1}$

EP 3 611 674 A1

# Fig.6

**TRANSFER OPERATION CONTROL DEVICE** (20)

- BUFFER USAGE RATE ACQUISITION UNIT (25)
- OPERATION IMPORTANCE LEVEL CALCULATION UNIT (11)
- TRANSFER OPERATION DETERMINATION UNIT (12)
- OPERATION COMPLETION EVENT DETECTION UNIT (24)
- TRANSFER INFORMATION STORAGE UNIT (26)
- OUTPUT UNIT (13)

EP 3 611 674 A1

## Fig.7

| LINK IDENTIFIER | TRANSFER SOURCE WS IDENTIFIER | TRANSFER DESTINATION WS IDENTIFIER |
|---|---|---|
| x1y1 | $WS_{x1}$ | $WS_{y1}$ |
| x1y2 | $WS_{x1}$ | $WS_{y2}$ |
| x1y3 | $WS_{x1}$ | $WS_{y3}$ |
| x2y1 | $WS_{x2}$ | $WS_{y1}$ |
| x2y2 | $WS_{x2}$ | $WS_{y2}$ |
| x2y3 | $WS_{x2}$ | $WS_{y3}$ |
| y1z1 | $WS_{y1}$ | $WS_{z1}$ |
| y2z1 | $WS_{y2}$ | $WS_{z1}$ |
| y3z1 | $WS_{y3}$ | $WS_{z1}$ |

# Fig.8

| MOVEMENT COST IDENTIFIER | MOVEMENT SOURCE WS IDENTIFIER | MOVEMENT DESTINATION WS IDENTIFIER | MOVEMENT COST | EXPLANATION |
|---|---|---|---|---|
| $C_{x1x1}$ | $WS_{x1}$ | $WS_{x1}$ | 1 | COST OF MOVEMENT FROM INPUT BUFFER OF $WS_{x1}$ TO OUTPUT BUFFER OF $WS_{x1}$ |
| $C_{x1x2}$ | $WS_{x1}$ | $WS_{x2}$ | 2 | COST OF MOVEMENT FROM INPUT BUFFER OF $WS_{x1}$ TO OUTPUT BUFFER OF $WS_{x2}$ |
| $C_{x1y1}$ | $WS_{x1}$ | $WS_{y1}$ | 4 | COST OF MOVEMENT FROM INPUT BUFFER OF $WS_{x1}$ TO OUTPUT BUFFER OF $WS_{y1}$ |
| $C_{x1y2}$ | $WS_{x1}$ | $WS_{y2}$ | 3 | COST OF MOVEMENT FROM INPUT BUFFER OF $WS_{x1}$ TO OUTPUT BUFFER OF $WS_{y2}$ |
| $C_{x1y3}$ | $WS_{x1}$ | $WS_{y3}$ | 2 | COST OF MOVEMENT FROM INPUT BUFFER OF $WS_{x1}$ TO OUTPUT BUFFER OF $WS_{y3}$ |

# Fig.9

```
                              ┌─────────────┐
                              │    START    │
                              └──────┬──────┘
                                     │
         ┌───────────────────────────┼
         │                           ▼
    NO   ◄────────────◄ TRANSFER OPERATION ►────────────────  S201
    ◄────────────────  COMPLETION?
                                     │
                                   YES
                                     ▼
              ┌──────────────────────────────────────────┐
              │  ACQUIRE BUFFER USAGE RATE AND MOVEMENT   │      S202
              │                  COST                     │
              └────────────────────┬─────────────────────┘
                                   ▼
              ┌──────────────────────────────────────────┐
              │   CALCULATE IMPORTANCE LEVEL OF EACH      │
              │ PREDETERMINED TRANSFER OPERATION, BASED ON│      S203
              │    BUFFER USAGE RATE AND MOVEMENT COST    │
              └────────────────────┬─────────────────────┘
                                   ▼
              ┌──────────────────────────────────────────┐
              │    DETERMINE, AS CANDIDATE FOR TRANSFER   │
              │  OPERATION TO BE PERFORMED NEXT, TRANSFER │      S204
              │ OPERATION HAVING MAXIMUM IMPORTANCE LEVEL │
              └────────────────────┬─────────────────────┘
                                   ▼
              ┌──────────────────────────────────────────┐
              │  OUTPUT TRANSFER OPERATION INFORMATION    │      S205
              │   RELATED TO DETERMINED TRANSFER OPERATION│
              └────────────────────┬─────────────────────┘
                                   │
         └───────────────────────────┘
```

# Fig.10

| BUFFER IDENTIFIER | BUFFER USAGE RATE |
|---|---|
| $I_{x1}$ | 80 |
| $O_{x1}$ | 100 |
| $I_{x2}$ | 80 |
| $O_{x2}$ | 100 |
| $I_{y1}$ | 90 |
| $O_{y1}$ | 100 |
| $I_{y2}$ | 90 |
| $O_{y2}$ | 80 |
| $I_{y3}$ | 90 |
| $O_{y3}$ | 70 |
| $I_{z1}$ | 50 |
| $O_{z1}$ | 10 |

## Fig.11

| LINK IDENTIFIER | CALCULATION EQUATION | IMPORTANCE LEVEL |
|---|---|---|
| x1y1 | $\dfrac{O_{x1} - I_{y1}}{C_{x1x1}} = \dfrac{100 - 90}{1}$ | 10 |
| x1y2 | $\dfrac{O_{x1} - I_{y2}}{C_{x1x1}} = \dfrac{100 - 90}{1}$ | 10 |
| x1y3 | $\dfrac{O_{x1} - I_{y3}}{C_{x1x1}} = \dfrac{100 - 90}{1}$ | 10 |
| x2y1 | $\dfrac{O_{x2} - I_{y1}}{C_{x1x2}} = \dfrac{100 - 90}{2}$ | 5 |
| x2y2 | $\dfrac{O_{x2} - I_{y2}}{C_{x1x2}} = \dfrac{100 - 90}{2}$ | 5 |
| x2y3 | $\dfrac{O_{x2} - I_{y3}}{C_{x1x2}} = \dfrac{100 - 90}{2}$ | 5 |
| y1z1 | $\dfrac{O_{y1} - I_{z1}}{C_{x1y1}} = \dfrac{100 - 50}{4}$ | 12.5 |
| y2z1 | $\dfrac{O_{y2} - I_{z1}}{C_{x1y2}} = \dfrac{80 - 50}{3}$ | 10 |
| y3z1 | $\dfrac{O_{y3} - I_{z1}}{C_{x1y3}} = \dfrac{70 - 50}{2}$ | 10 |

Fig.12

INFORMATION PROCESSING DEVICE 90

COMMUNICATION INTERFACE 91

INPUT/OUTPUT INTERFACE 92

DRIVE DEVICE 96

RECORDING MEDIUM 97

ARITHMETIC DEVICE 93

STORAGE DEVICE 94

NON-VOLATILE STORAGE DEVICE 95

EP 3 611 674 A1

**INTERNATIONAL SEARCH REPORT**

| International application No. |
| --- |
| PCT/JP2017/015086 |

| A. CLASSIFICATION OF SUBJECT MATTER |
| --- |
| *G06Q10/06*(2012.01)i, *G05B19/418*(2006.01)i |
| According to International Patent Classification (IPC) or to both national classification and IPC |

| B. FIELDS SEARCHED |
| --- |
| Minimum documentation searched (classification system followed by classification symbols) |
| G06Q10/06, G05B19/418 |
| Documentation searched other than minimum documentation to the extent that such documents are included in the fields searched |
| Jitsuyo Shinan Koho       1922–1996   Jitsuyo Shinan Toroku Koho   1996–2017<br>Kokai Jitsuyo Shinan Koho   1971–2017   Toroku Jitsuyo Shinan Koho   1994–2017 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2009-294852 A   (Sharp Corp.),<br>17 December 2009 (17.12.2009),<br>paragraphs [0020] to [0146]; fig. 1 to 19<br>(Family: none) | 1-25 |
| Y | JP 2008-181373 A   (Elpida Memory, Inc.),<br>07 August 2008 (07.08.2008),<br>paragraphs [0083] to [0089]<br>& US 2008/0275584 A1<br>paragraphs [0116] to [0123] | 1-25 |
| Y | WO 2007/132651 A1   (Murata Machinery Ltd.),<br>22 November 2007 (22.11.2007),<br>paragraph [0031]<br>& JP 4746674 B2         & US 2009/0208313 A1<br>paragraphs [0116] to [0142]<br>& EP 2053481 A1         & CN 101443717 A | 5-9,14-17,<br>22-25 |

| ☒  Further documents are listed in the continuation of Box C. | ☐   See patent family annex. |
| --- | --- |

| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>    21 June 2017 (21.06.17) | Date of mailing of the international search report<br>    04 July 2017 (04.07.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/015086

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-99116 A  (Sharp Corp.), 04 April 2003 (04.04.2003), entire text; all drawings (Family: none) | 1-25 |
| A | JP 2001-38582 A  (Sharp Corp.), 13 February 2001 (13.02.2001), entire text; all drawings (Family: none) | 1-25 |
| A | JP 2002-229619 A  (Sharp Corp.), 16 August 2002 (16.08.2002), entire text; all drawings (Family: none) | 1-25 |
| A | JP 2009-146050 A  (Sharp Corp.), 02 July 2009 (02.07.2009), entire text; all drawings (Family: none) | 5-9,14-17, 22-25 |

Form PCT/ISA/210 (continuation of second sheet) (January 2015)

**EP 3 611 674 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012220960 A